# EUROPEAN PATENT APPLICATION

(11) **EP 4 776 608 A1**
(43) Date of publication of application: **15.07.2026**
(21) Application number: 26150612.5
(22) Date of filing: 07.01.2026
(51) Int. Cl.: H04N 7/18

(54) **CAMERA OPERATION VERIFICATION SYSTEM AND METHOD**

(30) Priority: 09.01.2025 US 202519014575
(71) Applicant: Tyco Fire & Security GmbH, 8212 Neuhausen am Rheinfall (CH)
(72) Inventor: PANTAPALLI, Dhana Shekhar, Hyderabad (IN); AR, Giriraj, Bangalore (IN); NAGPAL, Ankur, Hyderabad (IN); RICHARD, Brian C., Lunenburg, Massachusetts (US); ROZNER, Amit, Yehud (IL); FALIK, Yohay, Petah Tiqwa (IL); DOTAN, Calanit, 8212 Neuhausen am Rheinfall (CH)
(74) Representative: Meissner Bolte Nürnberg

(57) **Abstract**

A security device maintenance system is provided. The aspects include one or more processors configured to assess security data quality by conducting one or more tests that compare the security data to one or more predetermined thresholds, assign one or more anomaly indicators to security devices if the security data quality fails to meet the one or more predetermined thresholds, and generate an automated maintenance report for the one or more security devices including the one or more anomaly indicators. The aspects can also include periodically retrieving one or more security data from the one or more security devices, utilizing an artificial intelligence (AI) model to detect one or more anomalies, and generating one or more predictive maintenance suggestions.

## Description

This patent application is a continuation-in-part and claims the benefit of U.S. Patent Application Serial No. 18/757,458 filed June 27, 2024, titled "CAMERA OPERATION VERIFICATION SYSTEM AND METHOD" and claims the benefit of U.S. Provisional Application No. 63/523,552, filed on June 27, 2023, titled "METHOD AND SYSTEM FOR SCREEN ANALYSIS FOR AUTOMATED VIDEO CAMERA INSPECTION." The disclosures of the prior applications are hereby incorporated by reference in their entirety.

Aspects of the present disclosure relate generally to a camera operation verification method and system.

In recent years, the field of surveillance has suffered from attacks against security systems becoming popular. For example, new generative Artificial Intelligence models (e.g., DeepFake) attacks pose a threat to security systems. In addition, security cameras are expensive to purchase and install. However, over the course of a year, a large percentage of deployed cameras become unusable due to camera movement, the camera being blocked, the presence of excessive darkness or brightness, blurring, and so forth.

Hence, there is a need to prevent physical or digital attacks and also to alert on camera quality degradation due to camera movement, blocked camera view, and so forth.

Moreover, another problem in the field of surveillance is that only after an incident occurs is it discovered that video of the incident is not available. This can be due to multiple reasons including, but not limited to, video camera issues (e.g., view obstructed, camera moved, water/blurry, malfunctioning camera, poor lighting at different hours of the day, etc.), network issues (the camera and/or recorder are offline), and/or video recorder issues (e.g., not recording video for that camera, recording was already overwritten (e.g., someone changed the recording settings from 90 days to 30), etc.).

To solve this problem today, high security sites routinely verify video operation by viewing each and every camera on site, and ensuring video is being recorded appropriately. However, this is a very slow and tedious process for larger sites with thousands of cameras. In addition, this becomes even greater of a challenge when the site uses video cameras and/or video recorders from different manufacturers.

Hence, there is a need to verify the operation of each camera in an automatic manner and irrespective of the use of video recorders and/or video cameras made by different manufacturers.

In some monitored areas (e.g., buildings), operators may employ a monitoring system to detect different types of events occurring within and/or around the monitored area (e.g., unauthorized access to a room, a medical emergency, building fire, building flood). For example, an operator may install video cameras throughout a monitored area for monitoring the movement of people within the monitored area. In some instances, a video camera may malfunction, or be adjusted by an unauthorized party. However, in systems employing a large number of video cameras, it may be difficult and/or cumbersome to detect when a video camera is malfunctioning or adjusted.

Hence, there is a need for an automated way to determine when a video camera is malfunctioning or should be adjusted.

Furthermore, video surveillance and monitoring systems for many enterprises can include video management systems that track and control large quantities of video cameras, on the order of thousands or more. Maintaining these large quantities of video cameras in acceptable working order can be a tedious and time-consuming task. Failure to properly maintain any number of these video cameras can be costly and result in security breaches, theft, vandalism, and/or reduced safety.

The following presents a simplified summary of one or more aspects to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects in a simplified form as a prelude to the more detailed description that is presented later. Embodiments according to the invention are disclosed in particular in the appended claims.

According to aspects of the present disclosure, a video camera recording system is provided. The system includes one or more memories configured to store program code. The program code is for performing an automated verification test of elements of the video camera recording system using at least one artificial intelligence (AI) model to identify potential issues with the elements of the video camera recording system. The system further includes one or more processors, operatively coupled to the one or more memories and configured to run the program code. The system also includes a transceiver configured to transmit instructions causing a corrective action to be performed for at least one of the potential issues.

According to other aspects of the present disclosure, a method for video camera recording system operation verification is provided. The method includes performing an automated verification test of elements of the video camera recording system using at least one artificial intelligence (AI) model to identify potential issues with the elements of the video camera recording system. The method further includes transmitting instructions causing a corrective action to be performed for at least one of the potential issues.

According to other aspects of the present disclosure, a method of maintaining security devices is provided. The method includes acquiring security data from one or more security devices, assessing security data quality by conducting one or more tests that compare the security data to one or more predetermined thresholds, and assigning one or more anomaly indicators to security devices if the security data quality fails to meet the one or more predetermined thresholds, and generating an automated maintenance report for the one or more security devices including the one or more anomaly indicators.

According to other aspects of the present disclosure, a security device maintenance system is provided. The system includes acquiring security data from one or more security devices, assessing security data quality by conducting one or more tests that compare the security data to one or more predetermined thresholds, and assigning one or more anomaly indicators to security devices if the security data quality fails to meet the one or more predetermined thresholds, and generating an automated maintenance report for the one or more security devices including the one or more anomaly indicators.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which.
**FIG. 1** is a block diagram showing an example video camera recording system configured for automatic camera recording system operation verification, in accordance with an example aspect.
**FIG. 2** is a block diagram showing another example video camera recording system configured for automatic camera recording system operation verification, in accordance with an example aspect.
**FIG. 3** is a block diagram showing artificial intelligence models, in accordance with an example aspect.
**FIG. 4** is a block diagram further showing artificial intelligence models, in accordance with an example aspect.
**FIG. 5** is a flowchart of an example method for video camera recording system operation verification, in accordance with an example aspect.
**FIG. 6** is a flowchart further showing the method of FIG. 5 for video camera recording system operation verification, in accordance with an example aspect.
**FIG. 7** is a diagram showing an event monitoring system configured to monitor activity within and/or around a monitored area, and identify video capture device incidents, I accordance with an example aspect.
**FIG. 8** is a diagram showing an example of a monitoring interface, in accordance with an example aspect.
**FIG. 9** is a flow diagram showing an example method for providing screen analysis for automated video camera inspection, in accordance with an example aspect.
**FIG. 10** is a block diagram showing a computing device, in accordance with an example aspect.
**FIG. 11** is a flowchart of an example method for maintaining security devices, in accordance with an example aspect.
**FIG. 12** is a flowchart of an example method for maintaining security devices using AI, in accordance with a first example aspect.
**FIG. 13** is a flowchart of an example method for maintaining security devices using AI, in accordance with a second example aspect.
**FIG. 14** is a flowchart of an example method for maintaining security devices using AI, in accordance with a third example aspect.
**FIG. 15** is a flowchart of an example method for maintaining security devices using AI, in accordance with a fourth example aspect.
**FIG. 16** is a flowchart of an example method for training an AI model for anomaly detection with respect to security system maintenance, in accordance with an example aspect.

### DETAILED DESCRIPTION

Aspects of the present disclosure are directed to a camera operation verification system and method.

The system is configured to perform real-time inspections for the following critical factors: sudden scene changes; blocked views; variations in lighting conditions; and AI DeepFake cyber-attack protection. Our automatic camera monitoring system offers capabilities in ensuring continuous, reliable surveillance across diverse environments. By proactively identifying and addressing issues, the system empowers operators with the tools needed to maintain optimal surveillance effectiveness and security.

Scene changes are detected through one of the following methods:
METHOD 1: Utilizing corresponding SIFT keypoints (kps) between the reference frame and the tested frame to identify movement. If a significant movement is detected, then a scene change alarm is triggered. However, METHOD 1 may not effectively detect complete scene changes or high differences in illumination between the frames.
METHOD 2: If METHOD 1 is ineffective due to complete scene changes or substantial differences in illumination, edges are identified in both frames. Template matching is then employed to determine the translation that provides the best match.

### Blocked view/variations in lighting conditions

The detection of a blocked view involves identifying contours within the frame and examining the statistical properties of their grayscale levels.

Areas with significantly low/high grayscale values and low standard deviation are considered as potential blocked view regions or having lighting issues.

The first step involves detecting and delineating contours present within the frame.

These contours delineate the boundaries or outlines of various objects or features within the image, including instances of lighting issues or physical obstructions. Once the contours are identified, the next step is to analyze the grayscale levels associated with the pixels included within these contours. By examining the statistical properties of these grayscale levels, such as the mean and standard deviation, the characteristics of the areas delineated by the contours can be accessed. Regions characterized by notably low grayscale values and minimal variation (as indicated by low standard deviation) are indicative of areas where the view may be obstructed. Therefore, these regions are flagged as potential obstructed view areas, warranting further investigation or action in surveillance or monitoring applications.

This present disclosure leverages artificial intelligence (AI) to analyze the screen and automatically perform a verification test within the software (just like an operator would do). The AI is able to open and view each camera, detect if video appears, has been moved, distorted/blurry, ensure recorded video is available (to duration), etc.. The system is able to do this automatically and efficiently on a random and adhoc schedule to ensure camera(s) have vision across different weather, lighting conditions and also proactively tell camera has moved (real-time). As the cameras and recorders are inspected, a health dashboard can be displayed to advise where "cameras" are not functioning properly. The present disclosure works across most software, across most camera and recorder manufacturers; because the AI is able to learn to use the software like the operator uses the software to perform the same visual inspection.

This is the next generation of AI, that inspects and learns the software (via screen analysis), to perform the video verification and tests. No specific video hardware is required.

Various aspects disclosed herein may include advantages including not requiring a specific hardware (HW) recorder, running specific firmware, and/or running specific camera HW, which may be inexpensively implemented. Some aspects include a software overlay that does not require any special HW. In some aspects, this software (SW) works best when all of the cameras are being watched in a single Software instance like CCURE-IQ (and video integrations).

Aspects of the present disclosure are directed to a security device maintenance system and method.

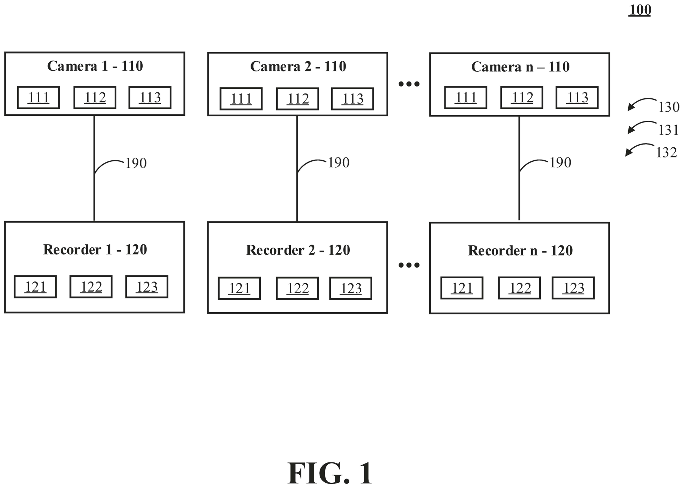

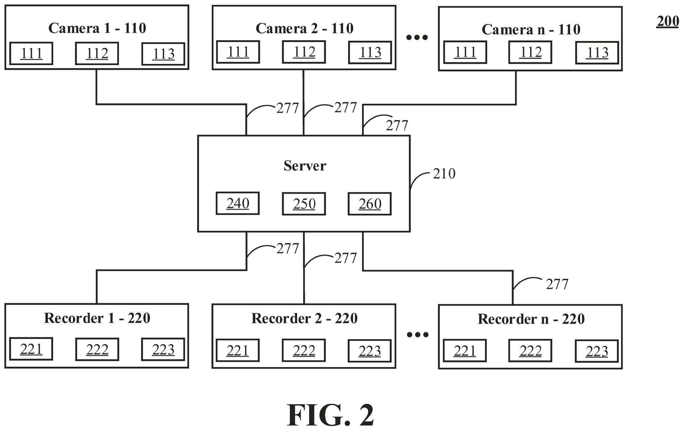

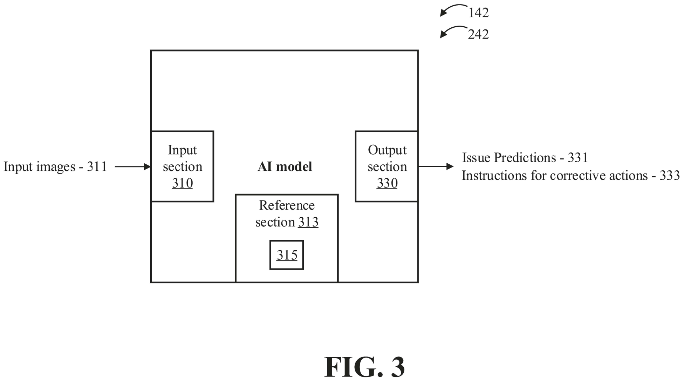

Referring to **FIGS. 1-3****,** an example video camera recording system 100 configured for automatic camera recording system operation verification is shown in **FIG. 1****,** another example video camera recording system 200 configured for automatic camera recording system operation verification is shown in **FIG. 2****,** and AI models 142, 242 stored in memories of elements of the video camera recording system are shown in **FIG. 3****,** in accordance with an example aspect.

The systems 100 and 200 include a set of video cameras 110 (e.g., cameras 1 to n) configured to capture video images, a set of video recorders 120 (e.g., recorders 1 to n) configured to record the captured video images, and a network 130 configured to connect the video cameras 110 to the video recorders 120.

In an aspect, the video cameras 110 include transceivers 113 and the video recorders 120 include transceivers 123 for communicating with each other over wireless network 131.

In an aspect, the video cameras 110 and the video recorders 120 are connected to each other via wire/cable 190 over wired network 132. While a 1 to 1 connection scheme is shown, any other connections of cameras to recorders can be used so that more than one camera may be assigned a particular recorder.

In the aspect of **FIG. 1****,** the set of video cameras 110 include a set of one or more memories 111 and the set of video recorders 120 each include a set of one or more memories 121 configured to store program code as well as videos captured by the set of video cameras 110. The set of video camera(s) 110 includes a set of one of one or more processors 112 and the set of video recorder(s) 120 includes a set of one or more processors 122 configured to run the program code. The program code is for automatic camera recording system operation verification using artificial intelligence based issue detection. In an aspect, each video camera 110 and/or each video recorder 120 may include a set of memories 111, 121 and a set of processors 112, 122.

In the aspect of **FIG. 2****,** system 200 includes a server 210 having a set of one or more memories 240 configured to store program code and a set of one or more processors 250 configured to run the program code. In an aspect, each video camera and video recorder pair (there can be overlap, but a pair refers to the video camera and the video recorder assigned to the video camera) includes a respective set of one or more memories 240 and respective set of one or more processors 250. The program code is for automatic camera recording system operation verification using artificial intelligence based issue detection. In an aspect, a wireless transceiver 260 is configured to communicate with the wireless transceivers 113, 223 of the video cameras and the video recorders, respectively. In an aspect, wires 277 are used to interconnect the system elements.

The sets of one or more memories 111, 121, 240 and the sets of one or more processors 122, 222, 250 cooperate to store and execute program code for automatic video camera recording system operation verification using artificial intelligence based issue detection. To that end, the sets of one or more memories 111, 121, 240 further store AI models 142, 242 for identifying video camera issues, video recorder issues, and/or network issues. The sets of one or more memories 111, 121, 240 further store videos captured by the set of cameras 110.

The AI models 142, 242 are configured to receive image frames as input for comparison to reference frames corresponding to particular issues from among video camera issues, video recorder issues, and network issues. The AI models 142, 242 may repeatedly, at predetermined times, go through training to learn to identify various issues by reducing an error between an input image and a reference image selected as best corresponding to the input image. For example, a blocked camera may be depicted in an input image and similarly in a reference image. Hence, for all but the same predictions of, for example, a percentage of being blocked, there will be an error value. The closer the predicted reference image to the input image, the less the error therebetween.

Each of the AI models 142, 242 include an input section 310 configured to pre-process (scale, rotate, and so forth) input images 311 in preparation for comparison to reference images 315 stored in a reference section 313.

The comparison between input images and reference images can be scene-wise, object-wise, pixel-wise, and so forth. Any level of granularity can be used, depending upon the implementation versus the speed of result to be provided by the system, with the higher the granularity the slower the system result.

Outputs from an output section 330 of the AI models 142, 242 provide a prediction 331 of a possible (camera, recorder, and/or network) issue being encountered. Issue predictions are pre-mapped to the reference images they correspond to. In this way, upon detecting a match between an input image and a reference image (based on having the lowest error or difference there between), metadata associated with the reference image such as an implicated issue can be determined, where implicated issues can be from among video camera issues, video recorder issues, and/or network issues.

In an aspect, the prediction 331 may be provided with a confidence value 332. In an aspect, the confidence value 332 may be based on the error so that the larger the confidence value 332, the smaller the error between an input image and a reference image.

In an aspect, outputs from output section 330 may include instructions 333 for corrective actions to be initiated such as holding the camera still and/or resetting its position, cleaning the lens using a self-cleaning operation, re-focusing to overcome blurriness, replacing a broken camera, broken recorder, and/or broken network element, and so forth. A multiplexer may be connected to form pools of camera, recorders, and network elements from which cameras, recorders, and network elements are selected and readily swapped out when damage is detected. In this way, detection of an issue can be achieved as well as correction of the issue.

As one basis for error, each different pixel between an input image and a reference image may result in one or a preset number of error points being added to the final error score. Other basis may be used.

As a basis for error in a video camera, camera movement (oscillating pixel values indicative of camera movement and/or vibration), camera field of view blockage (blocked pixels), blurriness (out of focus), moisture (drop shaped obstructions), and so forth may be detected and indicated as a video camera issue.

As a basis for error in a video recorder and/or a network, any corruption of the recorded signal relative to the originally captured signal such as different pixel values or missing pixel values may be detected and indicated as a video recording issue. Also, a lack of meeting a specified video duration may be indicative of a recorder issue (e.g., lack of space/memory, and so forth).

As a basis for error in a network, an inability to transmit or receive an otherwise uncorrupted signal may be detected and indicated as a network issue. For example, a signal may be CRC checked at a transmitter and unable to be received by a receiver, indicating a network issue such as insufficient power at the transmitter for transmission, problems with the communication channel (broken wire/cable or blocked wireless transmission), or problems with the receiver (antenna issues, etc.).

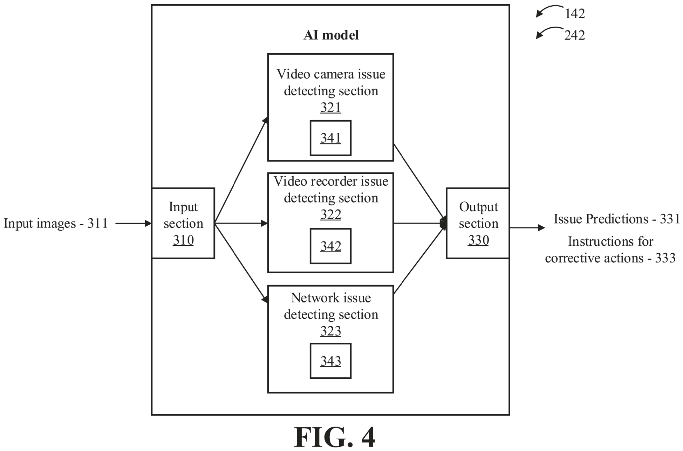

Referring to **FIG. 4****,** AI models 142, 242 are further shown, in accordance with an example aspect.

AI models 142, 242 include, in addition to the aforementioned input section 310 and output section 330, separate sections for detecting video camera issues, video recorder issues, and network issues, namely a video camera issue detecting section 321, a video recorder issue detecting section 322, and a network issue detecting section 323, respectively.

Each section from among sections 321-323 includes a respective corresponding reference image database for use in comparing to input images. For example, the video camera issue detecting section 321 includes a video camera issue detecting database 341, the video recorder issue detecting section 322 includes a video recorder issue detecting database 342, and the network issue detecting section 323 includes a network issue detecting database 343. Each of the sections 321-323 compares the input images to the corresponding database 341-343, respectively, so as to identify a particular issue and/or prediction 331 in a particular domain (e.g., camera, recorder, network) and provide instructions 333 for corrective action of the issue(s).

The output section 330 may implement max pooling or other functions on the domain outputs such as the domain specific issues 331 and corresponding instructions 333 for corrective action to arrive at a prediction result which may include more than one issue being specified and more than one corrective action being also specified and ultimately performed.

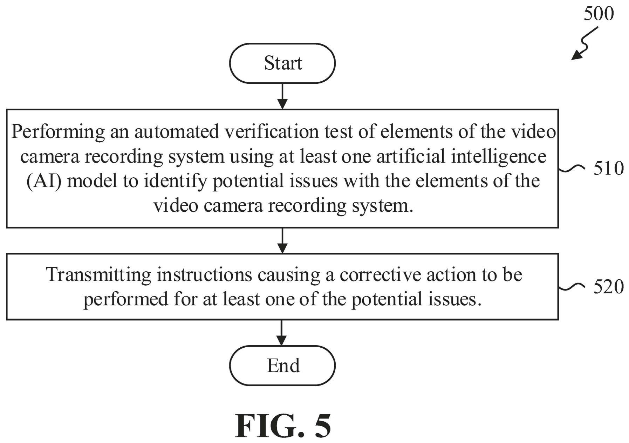

Referring now to **FIGS. 5-6****,** a method 500 for automatic video camera recording system operation verification using artificial intelligence is shown and described in accordance with various example aspects. Boxes shown in dashes are optional features.

Method 500 may be performed by at least in part performed by one or more processors (e.g., one or more processors 112, 122 of **FIG. 1** and one or more processors 150 of **FIG. 2**) operatively coupled to one or more memories (e.g., one or more memories 111, 121 of **FIG. 1** and one or more memories 140 of **FIG. 2**).

**FIG. 5** is a flowchart of an example method 500 for video camera recording system operation verification, in accordance with an example aspect.

At block 510, method 500 includes performing an automated verification test of elements of the video camera recording system using at least one artificial intelligence (AI) model to identify potential issues with the elements of the video camera recording system.

At block 520, method 500 includes transmitting instructions causing a corrective action to be performed for at least one of the potential issues. For example, in an aspect, the method 500 may be performed on board camera and/or recorder and/or network card for self-correction by the entity running the method. In another aspect, the server 210 may transmit instructions for corrective action to a camera, recorder, and/or network element such as a network card to perform a self-corrective action or control another system element (motor, lens, shutter, etc.) to perform a correction action.

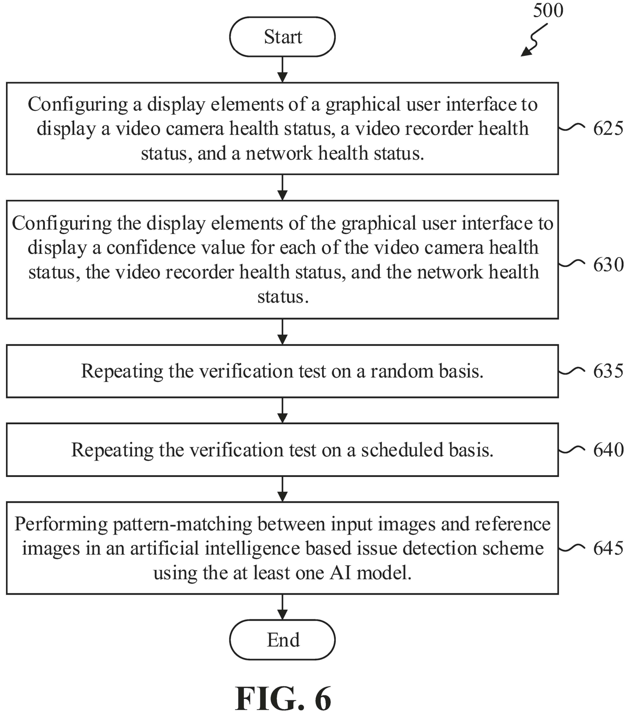

**FIG. 6** is a flowchart further showing the method 500 of FIG. 5 for video camera recording system operation verification, in accordance with an example aspect.

Blocks 625 and 630 describe the use of a graphical user interface to display system component health status and a confidence value for the system component health status. In this way, in addition to providing instructions in block 520 to an entity that can correct the issue, the system graphically provides a way to gauge the health of various system components such as video cameras, video recorders, and network elements.

At block 625, the method 500 includes configuring a display elements of a graphical user interface to display a video camera health status, a video recorder health status, and a network health status. For example, a first widget (graph, number range, color, etc.) may display video camera health status, a second widget may display a video recorder health status, and a third widget may display a network health status.

At block 630, the method 500 includes configuring the display elements of the graphical user interface to display a confidence value for each of the video camera health status, the video recorder health status, and the network health status.

Blocks 635 and 640 describe two ways to repeat the verification test of block 505.

At block 635, the method 500 includes repeating the verification test on a random basis.

At block 640, the method 500 includes repeating the verification test on a scheduled basis.

Block 645 further describes the verification test of block 505.

At block 645, the method 500 includes performing pattern-matching between input images and reference images in an artificial intelligence based issue detection scheme using the at least one AI model.

Further to the description above relating to comparing input images captured by a camera to reference images relating to artificial intelligence models to detect image difference, implementations of the present disclosure provide screen analysis for automated video camera inspection. In some implementations, one problem solved by the present disclosure is camera inspection in heterogeneous environments, which can be difficult to solve with other approaches. For example, this present disclosure describes systems and methods that employ computer vision in image comparisons to perform camera and other video camera recoding system component inspection and detect malfunction and/or unauthorized modification to a video camera, and/or a video recorder and/or a network element, which provides efficiency and ease of implementation benefits over approaches that require manual inspection, development of components for inspecting video information output by different types of video cameras, or decryption of video information output by a video camera.

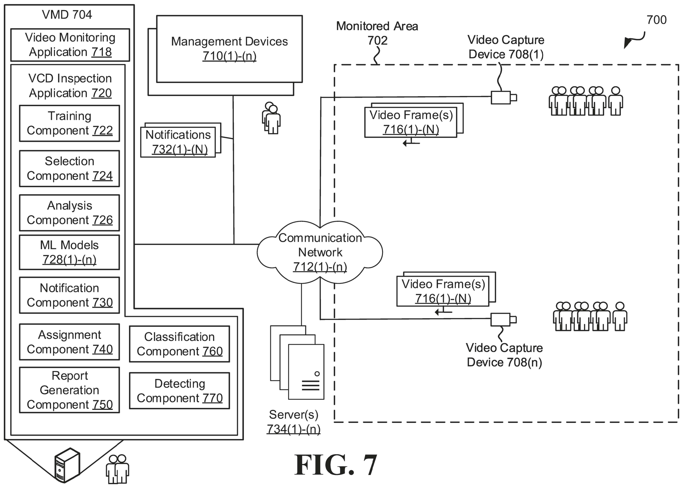

Referring to **FIG. 7****,** in one non-limiting aspect, an event monitoring system 700 is configured to monitor activity within and/or around a monitored area 702, and identify video capture device incidents. For example, event monitoring system 700 is configured to capture video feed data, and analyze the video feed data as displayed on a display device to detect video capture device incidents. Event monitoring system 700 is a system in which the present disclosure would be deployed to detect camera, recorder, and/or network issues. Aspects of the present disclosure may be applied to systems having hundreds or even thousands of cameras, where it is infeasible to manually check the operation of each camera and its corresponding recorder(s). Accordingly, aspects of the present disclosure advantageously permit for automatic camera recording system operation verification using artificial intelligence to learn as time goes on so as to improve the system accuracy in predicting issues such as component issues and which components. To that end, the aforementioned instructions for corrective action may identify which components to automatically replace using, for example, the aforementioned multiplexer and/or a relay system and/or so forth.

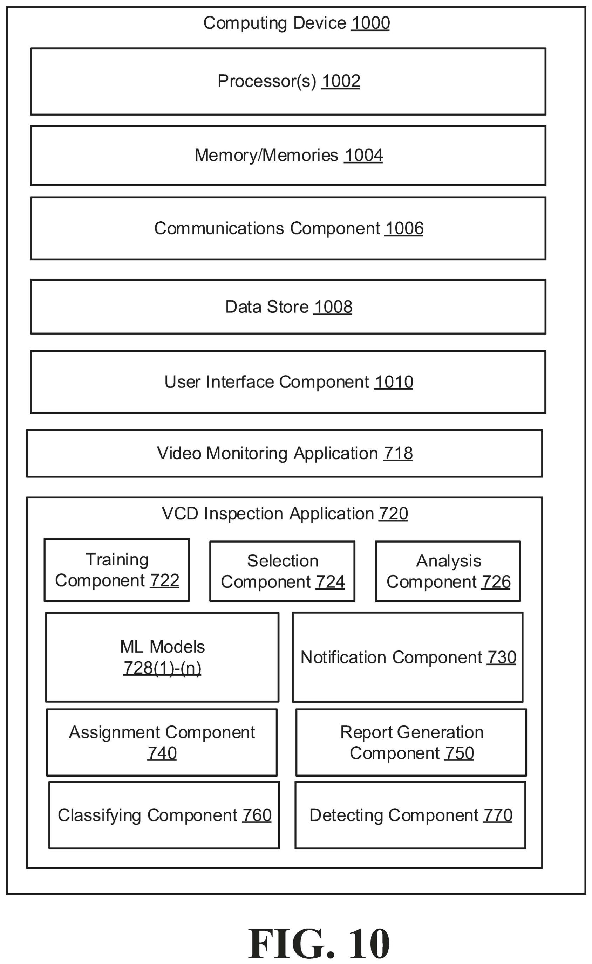

As illustrated in **FIG. 7****,** the event monitoring system 700 may include a video monitoring device (VMD) 704 (e.g., a computing device such as computing device 1000 of **FIG. 10**), one or more video capture devices 708(1)-(n) (e.g., a video camera), one or more management devices 710(1)-(n), one or more servers 734(1)-(n), and/or one or more communication networks 712(1)-(n). Further, the one or more video capture device 708(1)-(n) may be positioned in different areas of the monitored area 702. In some implementations, a communication network 712 may include a plain old telephone system (POTS), a radio network, a cellular network, an electrical power line communication system, one or more of a wired and/or wireless private network, personal area network, local area network, wide area network, and/or the Internet. Further, in some aspects, the video monitoring device 704, the one or more video capture devices 708(1)-(n), and the one or more management devices 710(1)-(n) may be configured to communicate via the communication networks 712(1)-(n). In some aspects data (e.g., videos, images, audio) can be stored in one or more databases on one or more servers 734(1)-(n).

In some aspects, the video capture devices 708(1)-(n) may capture one or more video frames 716(1)-(n) of activity within the monitored area 702, and transmit the one or more video frames 116(1)-(n) to the video monitoring device 704 via the communications network 712(1)-(n). Some examples of the management devices 710(1)-(n) include smartphones, computing devices, Internet of Things (IoT) devices, video game systems, robots, process automation equipment, control devices, vehicles, transportation equipment, and virtual and augmented reality (VR and AR) devices.

The video monitoring device 704 may be configured to receive the one or more video frames 716(1)-(n) from the video capture devices 708(1)-(n), present a monitoring interface (e.g., a graphical user interface) for viewing of the one or more video frames 716(1)-(n), inspect the video capture devices 708(1)-(n) based at least in part on the one or more video frames 716(1)-(n), and generate notifications upon detection of a video capture device incident at a video capture device 708 based on the inspection. As illustrated in FIG. 7, the video monitoring device 704 may include a video monitoring application 718 for presenting a monitoring interface for viewing the one or more video frames 716(1)-(n). In some aspects, the video monitoring application 718 may present a live stream including the one or more frames 716 or present playback of previously-captured video frames 716(1)-(n). For example, security personnel may monitor activity within the monitored area 702 by viewing the one or more frames 716 as presented by the video monitoring application 718. In some examples, the monitoring interface may provide playback controls for managing the viewing experience. Some examples of playback controls include magnifying/shrinking the one or more frames 716, speed up/down playback of the one or more frames 716, increase/decrease volume, fast-forward or rewind playback of the one or more frames 716, or play/pause/end playback of the one or more frames 716.

Further, the video monitoring device 704 may include a VCD inspection application 720 for inspecting the video capture devices 708(1)-(n) based at least in part on the one or more video frames 716(1)-(n), and generating notifications upon detection of a video capture device incident at a video capture device 108 based on the inspection. As illustrated herein, in some aspects, the VCD inspection application 720 may include a training component 722, a selection component 724, an analysis component 726, one or more ML models 728(1)-(n), a notification component 730, an assignment component 740, and a report generation component 750.

In some aspects, the training component 722 may train the one or more ML models 728(1)-(n) to identify function incidents at a video capture device 708 based on analysis of a video capture feed of a video capture device 708. For example, the training component 722 may train the one or more ML models 728(1)-(n) based on historic video information (e.g., previously-captured video frames 716(1)-(n)). In some aspects, a "function incident" may refer to a malfunction, offline status, and/or modification to a positioning, field of view, or other capture attribute of a video capture device. For example, in some aspects, the training component 722 may train the one or more ML models 728(1)-(n) to identify blur, a screen having a predefined color output e.g., black, blue, white, etc.), noise, an offline status, display of incorrect date and time information, an interrupted feed, an adjustment to a field of view of the video capture device, and/or an absence of liveliness (to detect a DeepFake). In addition, the training component 722 may train the one or more ML models 728(1)-(n) to determine whether a camera is obstructed or partially obstructed. In some examples, the one or more ML models 728 may include a neural network, deep learning network, convolutional neural network, and/or any another type of machine learning model. In some aspects, a "neural network" may refer to a mathematical structure taking an object as input and producing another object as output through a set of linear and non-linear operations called layers. Such structures may have parameters which may be tuned through a learning phase to produce a particular output, for instance, a function incident determination.

Further to detecting a DeepFake, in the case of a video sequence of a parking lot consisting of parking spaces and no trees or shrubs, the presence of a tree in the middle of the parking lot in a particular frame would be considered a fake by the system and an alert would then be provided to the proper authorities as well as the capturing of relevant electronic data including Internet Protocol address and so forth.

In some aspects, the selection component 724 selects a video capture feed of a video capture device for analysis by the VCD inspection application 720. In some aspects, the selection component 724 receives selection of a video capture device 708 and/or a video frames 716 received from a video capture device 708 via a graphical user interface (GUI) from a user. In some other aspects, the selection component 724 automatically selects a video capture feed of a video capture device 108 for analysis by the VCD inspection application 720. For example, the selection component 724 may periodically select each of the video capture devices 708 for inspection by the VCD inspection application 720. Further, in some aspects, the selection component 724 determines the area where the monitoring interface displays the one or more video frames 716(1)-(n). For example, the selection component 724 may identify the area of a display device where the monitoring interface displays the one or more video frames 716(1)-(n). In some aspects, the one or more ML models may be further configured to identify an area of display of the one or more frames 716(1)-(n) on the display device.

In some aspects, the analysis component 726 determines whether there is a function incident within one or more video frames 716 of a video capture device 708 selected by the selection component 724. In some aspects, the analysis component 726 employs the one or more ML models 728(1)-(n) to identify function incidents. In particular, the analysis component 726 may capture one or more video frames 716 displayed by the monitoring interface (e.g., the analysis component 726 may capture the one or more video frames 716 at an area determined by the selection component 124), provide the captured one or more video frames 716 to the one or more ML models 728(1)-(n), and determine the occurrence of a function incident based upon the output of the one or more ML models 728(1)-(n). In some aspects, the one or more ML models 728 determine one or more attribute of the captured video frames 716, compare the one or more attributes to reference information to generate one or more function incident scores, and identifies a function incident based at least in part on a function incident score being greater than predefined threshold. In some examples, each function incident score corresponds to a different type of function incident.

The notification component 730 may be configured to present GUIs including a notification 732 identifying an occurrence of a function incident and/or send notifications 730(1)-(n) identifying an occurrence of a function incident to the management devices 710(1)-(n). Further, in some aspects, the notifications may be transmitted in response to a function incident identified by the analysis component 726. In some instances, the notifications 130(1)-(n) may be one or more of a visual notification, audible notification, or electronic communication (e.g., text message, email, etc.) to the management devices 710(1)-(n). Further, a notification 732 may be presented and/or sent to a user responsible for the video capture device 708 associated with the function incident.

The assignment component 740 may be configured to assign one or more anomaly indicators to one or more security devices (e.g., video camera device 708(1)-(n).

The report generation component 750 may be configured to generate one or more reports for output and review by a one or more of a machine, system, and/or person. In some aspects the generated reports can be one or more of printed, sent via one or more transmissions (e.g., via email, messaging service, or others), displayed via a user interface, and/or other means of review by a machine and/or person.

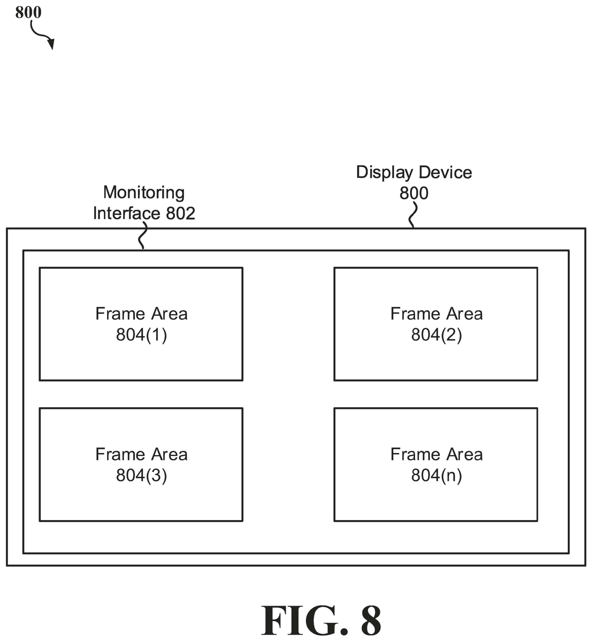

**FIG. 8** is an example 800 of a monitoring interface 802, according to some implementations.

As described in detail herein, the monitoring interface 802 displays individual frame areas 804 for video capture devices (e.g., video capture device 708). For example, the monitoring interface 802 presents a first frame area 804(1) that displays a plurality of video frames received from a first video capture device, a second frame area 804(1) that displays a plurality of video frames received from a second video capture device, a third frame area 804(3) that displays a plurality of video frames received from a third video capture device, and a nth frame area 804(n) that displays a plurality of video frames received from a nth video capture device. Further, as described herein, one or more frame areas 804 may be selected for inspection by the analysis component 726. Upon selection, the one or more video frames displayed within a selected frame area 804 is analyzed by the analysis component 726.

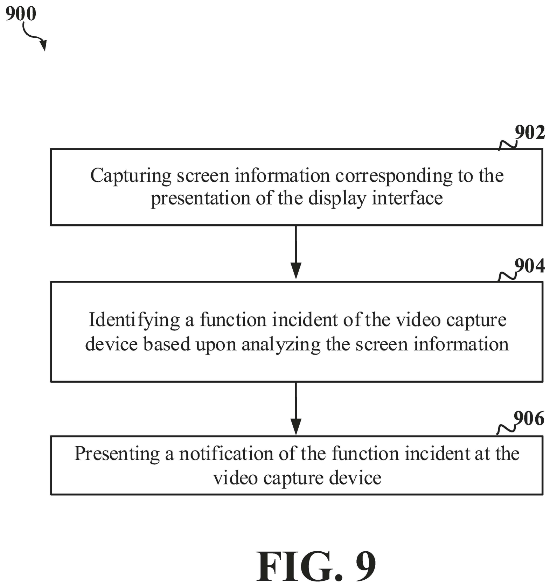

Referring to **FIG. 9****,** in operation, the video monitoring device 704 or computing device 1000 (see Fig. 10) may perform an example method 900 for providing screen analysis for automated video camera inspection. The method 900 may be performed by one or more components of the video monitoring device 704, the computing device 1000, or any device/component described herein according to the techniques described with reference to FIGS. 7-8.

At block 902, the method 900 includes capturing screen information corresponding to video presentation on a display interface. For example, the video capture devices 708(1)-(n) may capture the one or more video frames 716(1)-(n) and transmit the one or more video frames to the video monitoring device 704. Further, the selection component 724 may select a video capture device 708 and determine an area of display of the one or more frames 716 of the video capture device within a monitoring interface of a video monitoring application 718. In addition, the analysis component 726 may capture the one or more frames 716 of the selected video capture device 708. In some aspects, the analysis component 726 includes screen capture functionalities for capturing the one or more video frames 716 during display via a display device of the video monitoring device 704. Accordingly, the video monitoring device 704, the computing device 1000, and/or the one or more processors 1002 executing the selection component 724 and the analysis component 726 may provide means for capturing screen information corresponding to video presentation on a display interface.

At block 904, the method 900 includes identifying a function incident of the video capture device based upon analyzing the screen information. For example, the analysis component 726 may identify a function incident within the captured one or more frames 716 of the video capture device 708 via the one or more ML models 728(1)-(n). Accordingly, the video monitoring device 704, the computing device 1000, and/or the one or more processors 1002 executing the analysis component 726 may provide means for identifying a function incident of the video capture device based upon analyzing the screen information.

At block 906, the method 900 includes presenting a notification of the function incident at the video capture device. For example, if a function incident is identified, the notification component 730 may present a graphical user interface (GUI) including a notification 732 corresponding to detection of a function incident at the selected video capture device 708. Accordingly, the video monitoring device 704, the computing device 1000, and/or the one or more processors 1002 executing the notification component 730 may provide means for presenting a notification of the function incident at the video capture device.

Referring to **FIG. 10****,** a computing device 1000 may implement all or a portion of the functionality described herein. The computing device 1000 (e.g., a VMD such as VMD 704 of FIG. 7) may be or may include or may be configured to implement the functionality of at least a portion of the event monitoring system 700, or any component therein. For example, the computing device 1000 may be or may include or may be configured to implement the VMD 704, the VCD inspection application 720, the training component 722, the selection component 724, the analysis component 726, the one or more ML models 728(1)-(n), and/or the notification component 730. The computing device 1000 includes a one or more processors 1002 which may be configured to execute or implement software, hardware, and/or firmware modules that perform any functionality described herein. For example, the one or more processors 1002 may be configured to execute or implement software, hardware, and/or firmware modules that perform any functionality described herein with reference to the VCD inspection application 720, the training component 722, the selection component 724, the analysis component 726, the one or more ML models 728(1)-(n), the notification component 730, or any other component/system/device described herein. The one or more processors 1002 may be one or more micro-controller(s), application-specific integrated circuit (ASIC(s)), digital signal processor (DSP(s)), or field-programmable gate array (FPGA(s)), and/or may include a single or multiple set of processors or multi-core processors. Moreover, the one or more processors 1002 may be implemented as an integrated processing system and/or a distributed processing system. The computing device 1000 may further include one or more memories 1004, such as for storing local versions of applications being executed by the one or more processors 1002, related instructions, parameters, etc. The one or more memories 1004 may include a type of memory usable by a computer, such as random access memory (RAM), read only memory (ROM), tapes, magnetic discs, optical discs, volatile memory, non-volatile memory, and any combination thereof. Additionally, the one or more processors 1002 and the one or more memories 1004 may include and execute an operating system executing on the one or more processors 1002, one or more applications, display drivers, etc., and/or other components of the computing device 1000.

Further, the computing device 1000 may include a communications component 1006 that provides for establishing and maintaining communications with one or more other devices, parties, entities, etc. utilizing hardware, software, and services. The communications component 1006 may carry communications between components on the computing device 1000, as well as between the computing device 1000 and external devices, such as devices located across a communications network and/or devices serially or locally connected to the computing device 1000. In an aspect, for example, the communications component 1006 may include one or more buses, and may further include transmit chain components and receive chain components associated with a wireless or wired transmitter and receiver, respectively, operable for interfacing with external devices.

Additionally, the computing device 1000 may include a data store 1008, which can be any suitable combination of hardware and/or software, that provides for mass storage of information, databases, and programs. For example, the data store 1008 may be or may include a data repository for applications and/or related parameters not currently being executed by one or more processors 1002. In addition, the data store 1008 may be a data repository for an operating system, application, display driver, etc., executing on the one or more processors 1002, and/or one or more other components of the computing device 1000.

The computing device 1000 may also include a user interface component 1010 operable to receive inputs from a user of the computing device 1000 and further operable to generate outputs for presentation to the user (e.g., via a display interface to a display device). The user interface component 1010 may include one or more input devices, including but not limited to a keyboard, a number pad, a mouse, a touch-sensitive display, a navigation key, a function key, a microphone, a voice recognition component, or any other mechanism capable of receiving an input from a user, or any combination thereof. Further, the user interface component 1010 may include one or more output devices, including but not limited to a display interface, a speaker, a haptic feedback mechanism, a printer, any other mechanism capable of presenting an output to a user, or any combination thereof.

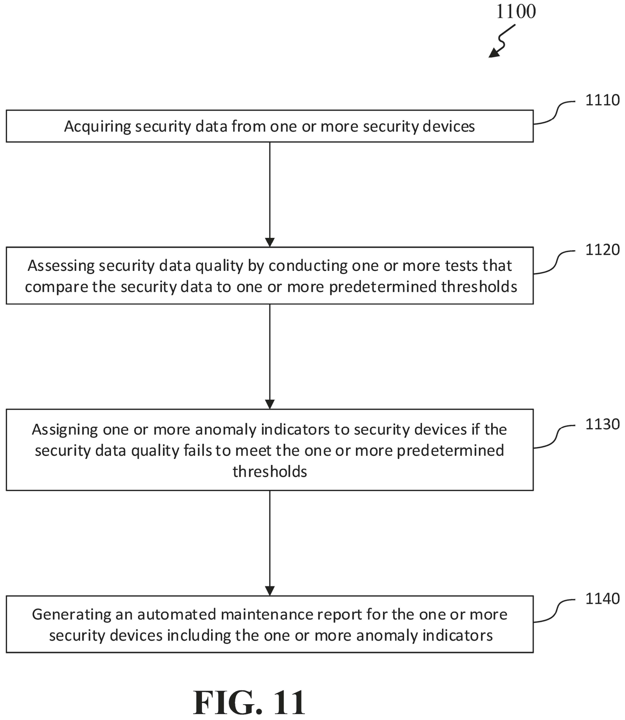

Referring to **FIG. 11****,** computing device 1000 may perform an example method 1100 for maintaining security devices. The method 1100 may be performed by one or more components of the video monitoring device 704, the computing device 1000, or any device/component described herein according to the techniques described with reference to **FIGs. 7-8****.** For example, computing device 1000 may perform example method 1100 using one or more processors 1002 to execute instructions stored in one or more memories 1004 that perform acquiring security data from one or more security devices.

At block 1110, the method 1100 includes, for example, security devices, which can include the video capture devices 708(1)-(n), which may capture security data, which can be the one or more videos and/or video frames 716(1)-(n). These videos and/or video frames 716(1)-(n) can be stored locally in memory at the video capture devices 708(1)-(n) and/or remotely in one or more databases located at one or more servers 734(1)-(n) and/or other computing devices. Once security data is acquired, for example by accessing and/or retrieving it from the one or more databases (e.g., as stored in one or more memory/memories 1004, data store 1008, and/or servers 734(1)-(n)), the one or more processors 1002 can use the security data, for example by assessing security data quality in block 1120.

At block 1120, the method 1100 includes, for example, assessing the acquired security data can include utilizing the VCD inspection application 720 including the selection component 724 selecting security data and the analysis component 726 conducting one or more tests that compare the security data to one or more predetermined thresholds. These tests can occur during a periodic maintenance check and can include employing one or more databases, such as one or more image and/or video processing libraries that are stored in one or more memories 1004 and/or data store 1008. Examples of tests include tamper detection, lens obstruction, frame clarity, brightness levels, and/or blur detection. Tests can include comparing the acquired security data with security data stored in the one or more databases and determining if one or more thresholds are met and/or exceeded. Thresholds can include percentage matching, percentage differentiation, and/or can include ranges. For example, if acquired data is an acquired image, the acquired image can be compared to one or more images stored in memory that is indicative of and/or is tagged and/or flagged according to one or more indicators.

An example of an indicator can be a tamper detection indicator. In this example, the selection component 724 can select security data stored in one or more memories 1004 and/or data store 1008, such as one or more images, videos, and/or audio, and the analysis component 726 can determine if the security device (e.g., video capture device 708(1)) that captured the security data has been tampered with by comparing the security data to previously stored security data from a security device that is known to have been tampered with. In some aspects, this can be determined by checking against one or more thresholds, ranges, or tamper signatures. A tamper signature can be a sudden, unexpected loss of power that may indicate a power line has been cut, identification of a person moving toward a security device immediately before the security device malfunctions, loses power, or otherwise ceases normal functioning.

Another example of an indicator can be a lens obstruction indicator. In this example, the selection component 724 can select security data, such as one or more images and/or videos stored in one or more memories 1004 and/or data store 1008, and the analysis component 726 can determine if a lens of the security device (e.g., VCD 708(1)) has been partially and/or fully obstructed. Obstruction can occur if an item or object (e.g., natural objects such as a plant, insect, animal, bird, moisture, and/or human made object such as a wall, vehicle, drone, pillow, blanket) blocks a portion or all of one or more lenses of the security device. In some aspects, an obstruction indicator can include one or more indicators that indicate an amount of lens obstruction, such as a percentage of a viewable frame, a time indication captured by a timer of the security device and/or management device(s) 710(1)-(n), and/or a distance indication (e.g., by measuring using analysis component 726 how far the obstruction is from the lens (e.g., on the lens, within inches, feet away).

Another example of an indicator can be a frame clarity indicator. In this example, the selection component 724 can select security data, such as one or more images and/or videos stored in one or more memories 1004 and/or data store 1008, and the analysis component 726 can determine if frame clarity. Frame clarity can be determined the analysis component 726 comparing the security data to previously captured security data from that is known to be unclear. In some aspects, this can be determined by checking against one or more clarity thresholds and/or ranges. Images and/or video can lack clarity if one or more lenses of the security device (e.g., VCD 708(1)) is out of focus such that edges around objects in the security data lack crispness, sharpness, or are otherwise unclear.

Another example of an indicator can be a blurriness indicator. In this example, if the acquired image is determined by comparison to match an image tagged and/or flagged as blurry to ninety-seven percent accuracy, then the acquired image may also be blurry. On the other hand, if the comparison indicates that there is only a fourteen percent accuracy of the match, then the image may be clear and/or not blurry. Images and/or video can be blurry if one or more lenses of the security device (e.g., VCD 708(1)) is out of focus such that entire objects in the security data lack crispness, sharpness, or are otherwise unclear and can be caused by one or more of focusing problems, moisture in or near the one or more lenses, one or more smudges and/or foreign objects or substances on the one or more lenses.

At block 1130, the method 1100 includes computing device 1000 using one or more processors 1002 to execute instructions stored in one or more memories 1004 that cause assignment component 740 to assign one or more anomaly indicators to one or more security devices (e.g., video capture device 708(1)-(n)) associated with security data. For example, assigning one or more anomaly indicators to one or more security devices 708(1)-(n) can occur if the security data quality fails to meet the one or more predetermined thresholds, levels, or falls within or outside one or more ranges.

In the tamper detection example, if the analysis component 726 determines that a security device (e.g., video capture device 708(1)) has been tampered with, a tamper anomaly indicator can be assigned to the security device by assignment component 740.

In the lens obstruction example, if the analysis component 726 determines that a security device (e.g., video capture device 708(1)) has an obstructed lens, a lens obstruction anomaly indicator can be assigned to the security device by assignment component 740.

In the frame clarity example, if the analysis component 726 determines that a security device (e.g., video capture device 708(1)) has a frame clarity issue, a frame clarity anomaly indicator can be assigned to the security device by assignment component 740.

In the blurriness example above, if the analysis component 726 determines that a security device (e.g., video capture device 708(1)) has a blurriness issue, a blurriness anomaly indicator can be assigned to the security device by assignment component 740.

At block 1140, the method 1100 includes computing device 1000 using one or more processors 1002 to execute instructions stored in one or more memories 1004 that cause a report generation component 750 to generate an automated maintenance report. For example, an automated maintenance report can be generated by report generation component 750 that includes a list and/or other indication of anomalies as assigned by assignment component 740. The maintenance report can indicate which security devices (e.g., video capture device (708(1)-(n)) are associated with one or more anomalies and can include one or more recommendations based on the indicated anomalies, which can be predetermined and/or predefined. For example, predetermined and/or predefined recommendations can be associated with and/or otherwise correspond to one or more anomaly indicators in one or more databases that are accessible via a lookup table and/or pointer. The automated maintenance report can include one or more indications that a maintenance person or other authorized person should perform a physical and/or manual check of the security device(s) associated with one or more anomalies, including one or more task recommendations such as checking power wiring, removing obstructions, cleaning and/or replacing lenses, replacing backup batteries, and/or adjusting an angle of the device to better capture an area. Once generated, the maintenance report can be transmitted to one or more person(s) and/or machine(s) for review and/or implementation of recommendations (not shown).

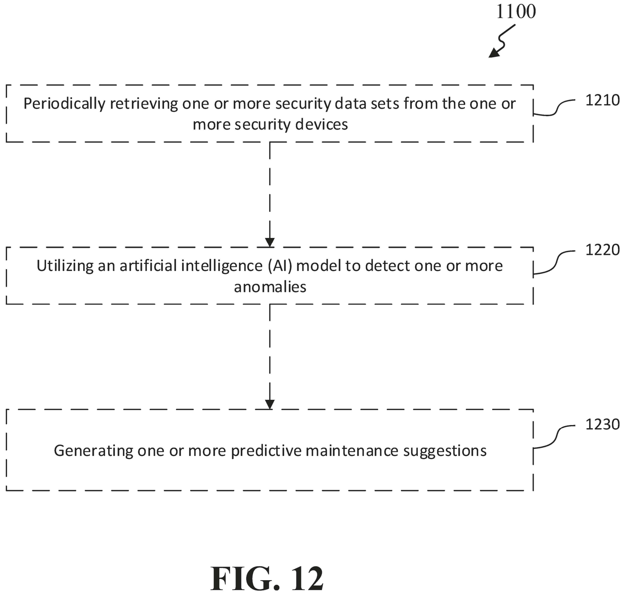

Referring to **FIG. 12****,** computing device 1000 may perform optional steps of an example method 1100 for maintaining security devices that can optionally be performed along with and/or after method 1100 of **FIG. 11****.** For example, computing device 1000 can perform example method 1100 using one or more processors 1002 to execute instructions stored in one or more memories 1004 that perform periodically retrieving (e.g., by selection component 724) one or more security data sets from one or more of memories 1004, data store 1008, and/or the one or more security devices (e.g., video capture device 708(1)-(n))

At block 1202, the method 1100 includes, for example, security devices can include the video capture devices 708(1)-(n), which may capture security data, which can be the one or more videos and/or video frames 716(1)-(n). These videos and/or video frames 716(1)-(n) can be stored locally in memory at the video capture devices 708(1)-(n) and/or remotely in one or more databases located in one or more of memories 1004, data store 1008, at one or more servers, and/or other computing devices. Once security data is acquired, for example by accessing and/or retrieving it from the one or more databases, analysis component 726 can use the security data, for example by assessing security data quality in block 1220. Periodicity can include hourly checks, daily checks, weekly checks, biweekly checks, monthly checks, annual checks, and/or others, as appropriate. One or more timers can be set via one or more processors 1002 such that when they expire or reach a defined time, an action is performed.

At block 1220, the method 1100 includes computing device 1000 using one or more processors 1002 to execute instructions stored in one or more memories 1004 utilizing an artificial intelligence (AI) model (e.g., ML Models 728(1)-(n)), also referred to herein as a ML model, to detect one or more anomalies. In various aspects, AI models can be trained using one or more datasets and can learn over time according to an iterative process, which security data can include anomalies. In some aspects, the one or more datasets can include real security data that has been captured by real security devices employed in the real world. In some aspects simulated security data can alternatively or additionally be used with security data that has been captured by real security devices employed in the real world. Security data from these real and/or simulated security devices can be collected and stored in one or more datasets that are organized according to location, features (e.g., lighting, angle, time of day, high traffic or low traffic areas, common or frequent anomalies, uncommon or infrequent anomalies, and/or by service date) and referenced in one or more databases (e.g., video camera issue detecting database 341, video camera issue detecting database 342, and/or network issue detecting database 343). In many instances, one or more actions and/or results can be associated with the security data. For example, if a number of frames of security data in a visual format (e.g., video recording or a series of consecutive images) include security data captured over time, changes can be monitored and catalogued in memory. When an anomaly occurs (e.g., security device goes offline, image quality degrades to a level the meets or exceeds a degradation threshold), one or more portions, sections, or all of the security data can be tagged or otherwise marked, manually and/or automatically, as having resulted in an anomaly (e.g., resulted in blurriness, tampering, or obstruction). Then, this security data can be stored in a data set in a database (e.g., video camera issue detecting database 341, video camera issue detecting database 342, and/or network issue detecting database 343) that are used to train one or more AI models, whereby the one or more AI models may tag or otherwise mark security data exhibiting one or more similar characteristics or traits as indicative of a future anomaly occurring. In some instances, the one or more AI models can also analyze the security data (e.g., via video camera issue detecting section 321, video recorder issue detecting section 322, and/or network issue detecting section 323) and determine an expected or predicted time and/or date when a future anomaly may occur. In this manner, an AI model can use real-world and/or simulated data (e.g., as inputs in input section 310) in order to provide accurate analysis of later captured security data (e.g., input images 311) that is fed into an input (e.g., input section 310) of an AI model (e.g., AI model 142, 242) and the AI model can be trained to accurately predict future anomalies and output (e.g., via output section 330) and/or issue predictions (e.g., issue predictions 331) and/or preventative maintenance instructions (e.g., instructions for corrective actions 333).

At block 1230, the method 1100 includes computing device 1000 using one or more processors 1002 to execute instructions stored in one or more memories 1004 utilizing report generation component 750 to one or more predictive maintenance suggestions.

As an example, AI Model (e.g., ML Models 728(1)-(n)) can learn over time (e.g., via video camera issue detecting section 321, video recorder issue detecting section 322, and/or network issue detecting section 323) that particular tamper signatures may or may not indicate tamper evidence. A minor or short power loss event can be a simple power interruption or fluctuation and may not mean that someone has tampered with a security device (e.g., video capture device 708(1)). These indications may, however, indicate that a power wire is loose or may result in a bad connection in the near future and a predefined maintenance suggestion can be provided by report generation component 750.

As another example, AI Model (e.g., ML Models 728(1)-(n)) can learn over time (e.g., via video camera issue detecting section 321, video recorder issue detecting section 322, and/or network issue detecting section 323) that a particular amount of lens obstruction in an image and/or video that does not meet a threshold will progress over a particular time period to meeting a lens obstruction threshold and therefore predict and/or determine that maintenance should be performed in advance of the lens obstruction threshold being met in order to prevent down time of the security device. To elaborate, a growing tree may only partially obstruct a security device's view of an area and therefore not meet a lens obstruction threshold at a given time. However, it may be known that as the tree continues to grow it will likely provide further lens obstruction. Accordingly, a predefined maintenance suggestion to trim and/or remove the tree can be provided by report generation component 750.

As another example, an AI model (e.g., ML Models 728(1)-(n)) can learn over time (e.g., via video camera issue detecting section 321, video recorder issue detecting section 322, and/or network issue detecting section 323) that a particular amount of blurriness in an image and/or video does not meet a threshold will progress over a particular time period to meeting a blurriness threshold and therefore predict and/or determine that maintenance should be performed in advance of the blurriness threshold being met in order to prevent down time of the security device. Accordingly, a predefined maintenance suggestion can be provided by report generation component 750.

In various aspects, preventative maintenance suggestion(s) can be stored in memories 1004 and/or data store 1008 and can be cross-referenced by one or more databases with one or more pointers and other otherwise associated with corresponding anomaly indicators. For example, preventative maintenance suggestion(s) for tampering could be to increase security in an area, upgrade security devices with alarms and/or floodlights, improve physical security of the security device by adding locks and/or storing wires in secure compartments, and/or reduce security device size and/or obviousness (e.g., by repositioning and/or obscuring vantage points). Examples of preventative maintenance suggestion(s) for blurriness can include cleaning security device lens(es), upgrading security device(s) and/or components therein, and/or improving lighting. Examples of preventative maintenance suggestion(s) for obstruction can include trimming and/or removing plants, removing and/or repositioning man-made objects, and/or repositioning the security device(s). Examples of preventative maintenance suggestions for frame clarity issues can include modifying and/or upgrading visual components of the security device(s). Examples of preventative maintenance suggestions for brightness levels can include adding, modifying, and/or removing lights, shades, and/or filters, and/or repositioning the security device(s) to reduce or eliminate glare from lighting (e.g., the sun, reflection off objects, or artificial lights). These preventative maintenance suggestions can be provided based on a predefined list and/or based on previous maintenance suggestions and/or occurrences that have been catalogued in connection with security data exhibiting similar characteristics to current and/or recently captured security data that are stored in memory.

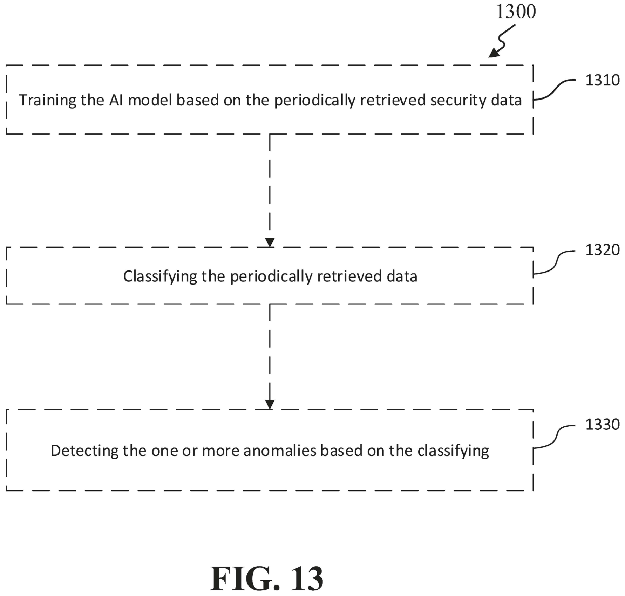

Referring to **FIG. 13****,** computing device 1000 may perform an example method 1300 for maintaining security devices. The method 1300 may be performed by one or more components of the video monitoring device 704, the computing device 1000, or any device/component described herein according to the techniques described with reference to FIGS. 7-8. In some aspects, method 1300 can be performed as optional additional steps of method 1100. In some aspects method 1300 can be performed independently. For example, computing device 1000 can perform the method 1300 including using one or more processors (e.g. processor(s) 1002) that are configured to train an AI model, as described above and in accordance with an example aspect.

At block 1310, for example, block 1310 can be performed according to one or more aspects of the description of FIGs, 3, 4, 7, 10, and/or 12. In various aspects training component 722 of VCD inspection application 720 can train ML Models 728(1)-(n) using one or more images.

At block 1320, the method 1300 includes one or more processors 1002 that are configured to classify the periodically retrieved data, as described above and in accordance with an example aspect. For example, block 1310 can be performed according to one or more aspects of the description of FIGs, 3, 4, 7, 10, and/or 12. In various aspects classification component 760 of VCD inspection application 720 can classify one or more images. Classifying can include one or more types of classification. For example, if security data includes images, the images can be classified as having some degree of tampering, obstruction, clarity, brightness, and/or blurriness. In some aspects, multiple classifications are possible. For example, if security data includes images, the images can be classified as blurry and misaligned, with a brightness level that is too high. This classification can be used in block 1330.

At block 1330, the method 1300 includes one or more processors 1002 that are configured to detect one or more anomalies based on the classifying, as described above in block 1320, and in accordance with an example aspect. For example, block 1310 can be performed according to one or more aspects of the description of FIGs, 3, 4, 7, 10, and/or 12. In various aspects detecting component 770 of VCD inspection application 720 can detect one or more anomalies in one or more images. For example, security data can be an image and the image can be classified by classifying component 760. Detecting component 770 can determine that an anomaly exists in the image by using the one or more ML models 728(1)-(n) to determine if one or more characteristic(s) of the image is indicative of an anomaly by comparing the one or more characteristic(s) to one or more predetermined anomaly thresholds. If the one or more characteristic(s) meets or exceeds the one or more predetermined anomaly thresholds, the detecting component 770 can indicate that an anomaly exists in the image.

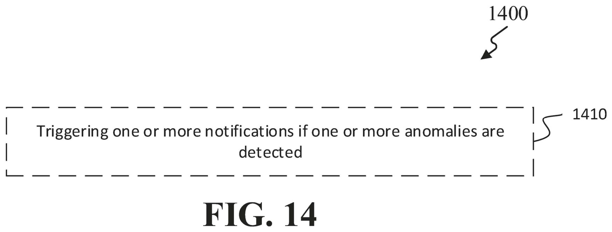

Referring to **FIG. 14****,** computing device 1000 may perform an example method 1400 for maintaining security devices. The method 1400 may be performed by one or more components of the video monitoring device 704, the computing device 1000, or any device/component described herein according to the techniques described with reference to FIGS. 7-8. In some aspects, method 1400 can be performed as optional additional step of method 1300. In some aspects method 1400 can be performed independently.

At block 1410, one or more notifications can be triggered by notification component 730 if one or more anomalies are detected by detecting component 770. For example, if the anomaly is blurriness, a blurriness notification can be triggered. Similarly, if the anomaly is tampering, obstruction, clarity, or brightness, a corresponding notification can be triggered. In some aspects the notification can be an alarm that sounds via a speaker, a visual indicator such as a pop up and/or flashing indicator on a graphical user interface, a haptic alert on a device configured for haptic alerts, an email, a text message, and/or combinations thereof. For example, one or more processor(s) 1002 can cause a speaker to output an audio indicator, one or more light emitting diodes (LEDs) or GUI to display a visual indicator, a motor to generate a haptic alert, and/or one or more networking component(s) to transmit an email and/or text message via a network.

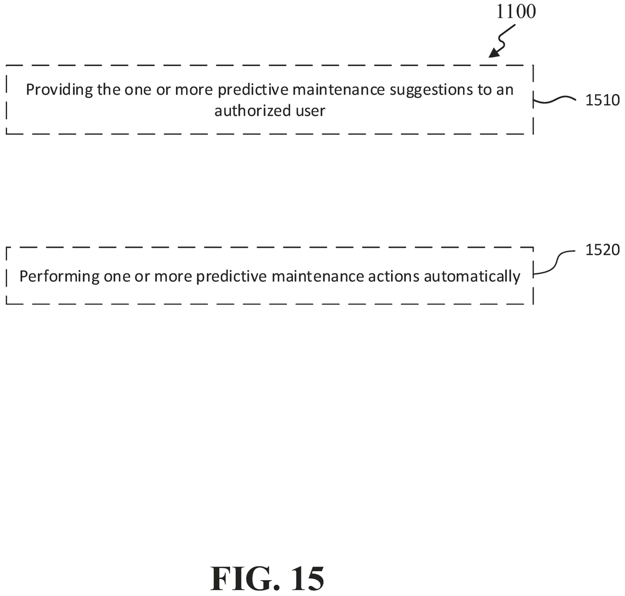

Referring to **FIG. 15****,** computing device 1000 may perform an example method 1100 for maintaining security devices. The method 1100 may be performed by one or more components of the video monitoring device 704, the computing device 1000, or any device/component described herein according to the techniques described with reference to FIGS. 7-8. The method 1100 may be performed by one or more components of the video monitoring device 704, the computing device 1000, or any device/component described herein according to the techniques described with reference to FIGS. 7-8. In some aspects, block 1510 and/or 1520 can be performed as optional additional step(s) of method 1100.

At block 1510, one or more maintenance suggestions can be provided to an authorized user in the form of an alarm that sounds via a speaker, a visual indicator such as a pop up and/or flashing indicator on a graphical user interface, a haptic alert on a device configured for haptic alerts, an email, a text message, and/or combinations thereof. For example, processor(s) 1002 can cause a speaker to output an audio indicator, one or more light emitting diodes (LEDs) or GUI to display a visual indicator, a motor to generate a haptic alert, and/or one or more networking component(s) to transmit an email and/or text message via a network. Alternatively or additionally, the one or more predictive maintenance suggestions can be provided to an authorized user in a report generated by report generation component 750.

At block 1520, one or more predictive maintenance actions can be automatically performed. For example, a malfunctioning device can be turned off, updated, and/or reset by one or more processors 1002. As another example, a device with water on a lens can be automatically moved to a position such that the water moves off a lens by one or more processors 1002 via an adjustment to a direction that the respective security device is pointing using one or more motors of the respective security device.

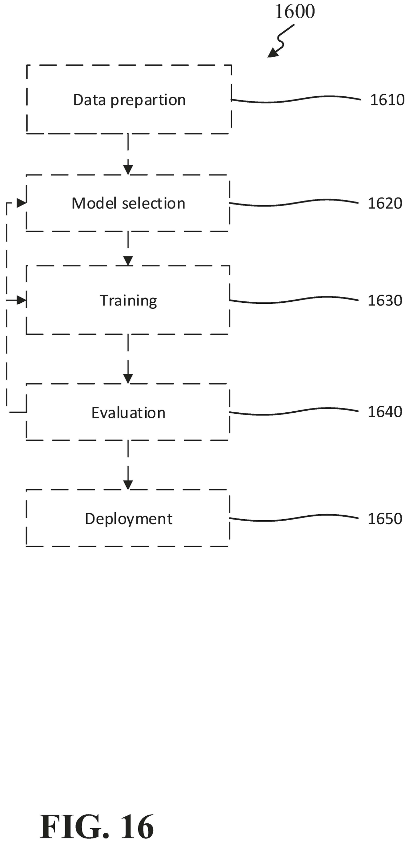

Referring to **FIG. 16****,** a method 1600 for training an AI model for anomaly detection with respect to security system maintenance can involve one or more steps, including data preparation, model selection, training, evaluation, deployment, and feedback, in accordance with an aspect. Computing device 1000 may perform example method 1600 for maintaining security devices. The method 1600 may be performed by one or more components of the video monitoring device 704, the computing device 1000, or any device/component described herein according to the techniques described with reference to FIGS. 7-8. The method 1600 may be performed by one or more components of the video monitoring device 704, the computing device 1000, or any device/component described herein according to the techniques described with reference to FIGS. 7-8. In some aspects, block 1610, 1620, 1630, 1640, and/or 1650 can be performed as optional additional step(s) of method 1100.Data preparation at block 1610 can include one or more of data collection and data cleaning. Data collection can include one or more processor(s) 1002 performing one or more of gathering historical data and anomaly labels from memory (e.g., memory/memories 1004). Gathering historical data can include gathering historical operational data from security systems, including one or more of camera status logs, recording quality metrics, and maintenance records. Data cleaning can include one or more processor(s) 1002 one or more of handling missing values and noise reduction. Handling missing values can include one or more processor(s) 1002 filling in, supplementing, adding, removing, or otherwise modifying data to ensure a complete dataset.

Model selection at block 1620 can include one or more processor(s) 1002 choosing or selecting an appropriate model for anomaly detection (e.g., ML Models 728(1)-(n). Appropriate models for anomaly detection can include one or more of statistical methods, machine learning algorithms, and deep learning.

Statistical methods can include Z-score and moving average. Z-score can include identifying anomalies based on a Z-score of data points. Moving average can include detecting anomalies through deviations from a moving average.

Machine learning algorithms can include isolation forest, one-class SVM, and autoencoders. An isolation forest can be an ensemble method that isolates anomalies in a data set. One-class support vector machine (SVM) can be a variation of support vector machine (SVM) used to identify outliers in datasets with one class of normal instances. Autoencoders can be one or more neural networks that are trained to reconstruct input data. Anomalies can be detected by measuring reconstruction errors.

Deep learning can include recurrent neural networks (RNNs) and/or long short-term memory (LSTM) networks that can be used for time-series data. In some aspects temporal dependencies can be captured in the data.

Training at block 1630 for a model can include one or more processor(s) 1002 performing data splitting, training process(es) and validation.

Data splitting can include splitting one or more datasets into training, validation, and test sets in order to evaluate model performance. For example, splitting a data set can include splitting the data set into portions, such as seventy percent for training, fifteen percent for validation, and fifteen percent for testing.

Training process(es) can include algorithm configuration and training. Algorithm configuration can include setting hyperparameters for a chosen and/or selected algorithm. Training can include training a model on a training dataset. For supervised models, this can include learning from labeled anomalies. For unsupervised models, this can include a model learning a structure of normal data.

Validation can include using a validation set to tune one or more hyperparameters and/or avoiding overfitting. Metrics can be monitored, such as accuracy, precision, recall, and F1 score. In some aspects, particularly focusing on recall and precision can be used to assess anomaly detection performance.

Evaluation at block 1640 can include one or more processor(s) 1002 evaluating performance of a model using a test set according to one or more performance metrics. In an aspect performance aspects can include confusion matrix, precision, recall, F1 score, ROC curve and AUC. Confusion matrix can include understanding true positives, false positives, true negatives, and false negatives. Precision can include determining a ratio of true positives to a total predicted positives. Recall can include determining a ratio of true positives to actual positives. F1 score can include determining a harmonic mean of precision and recall, which can be useful for imbalanced datasets. Receiver operating characteristic (ROC) curve and area under curve (AUC) can include analyzing a trade-off between a true positive rate and a false positive rate.

Deployment block at 1650 can include, once satisfied with model performance, model serving and/or monitoring. Model serving can include using tools such as a software library for machine learning and/or micro web framework application programming interfaces (APIs) to deploy a model for real-time anomaly detection. Monitoring can include implementing monitoring solutions to track model performance in production, which can include searching for and/or identifying drift in data distribution and/or degradation in accuracy.

A feedback loop can include establishing one or more feedback mechanisms in order to improve the model. This can lead to continual improvement of the model. Feedback mechanisms can include user feedback and/or periodic retraining. User feedback can include capturing user feedback on detected anomalies for retraining the model. Periodic retraining can include updating the model (e.g., regularly updating), with new data and retraining the model to maintain and/or improve accuracy.

Additional aspects of the present disclosure may include one or more of the following clauses. Any of these embodiments can be claimed in a separate claim, e.g. by substituting the word "Clause" by "Claim", in particular in the order as mentioned below and/or in any combination.

Clause 1. A video camera recording system, comprising: one or more memories configured to store program code, wherein the program code is for performing an automated verification test of elements of the video camera recording system using at least one artificial intelligence (AI) model to identify potential issues with the elements of the video camera recording system; one or more processors, operatively coupled to the one or more memories and configured to run the program code; and a transceiver configured to transmit instructions causing a corrective action to be performed for at least one of the potential issues.

Clause 2. The video camera recording system in accordance with clause 1, wherein the elements of the video camera recording system subjected to the automated verification test comprise video cameras, video recorders, and networks connecting the video cameras to the video recorders.

Clause 3. The video camera recording system in accordance with any preceding clauses, wherein the potential issues comprise video camera issues, video recorder issues, and network issues.

Clause 4. The video camera recording system in accordance with any preceding clauses, wherein the video camera issues comprise unintended camera movement, distortion, and blurriness.

Clause 5. The video camera recording system in accordance with any preceding clauses, wherein the video recording issues comprise an incorrect video duration.

Clause 6. The video camera recording system in accordance with any preceding clauses, further comprising a graphical user interface having display elements configured to display a video camera health status, a video recorder health status, and a network health status.

Clause 7. The video camera recording system in accordance with any preceding clauses, wherein the graphical user interface further has display elements configured to display a confidence value for each of the video camera health status, the video recorder health status, and the network health status.

Clause 8. The video camera recording system in accordance with any preceding clauses, wherein the verification test is repeated on a random basis.

Clause 9. The video camera recording system in accordance with any preceding clauses, wherein the verification test is repeated on a scheduled basis.

Clause 10. The video camera recording system in accordance with any preceding clauses, wherein the artificial intelligence comprises pattern-matching between input images and reference images.

Clause 11. A method for video camera recording system operation verification, comprising: performing an automated verification test of elements of the video camera recording system using at least one artificial intelligence (AI) model to identify potential issues with the elements of the video camera recording system; and transmitting instructions causing a corrective action to be performed for at least one of the potential issues.

Clause 12. The method in accordance with clause 11, wherein the elements of the video camera recording system subjected to the automated verification test comprise video cameras, video recorders, and networks connecting the video cameras to the video recorders.

Clause 13. The method in accordance with any preceding clauses, wherein the potential issues comprise video camera issues, video recorder issues, and network issues.

Clause 14. The method in accordance with any preceding clauses, wherein the video camera issues comprise unintended camera movement, distortion, and blurriness.

Clause 15. The method in accordance with any preceding clauses, wherein the video recording issues comprise an incorrect video duration.

Clause 16. The method in accordance with any preceding clauses, further comprising configuring a display elements of a graphical user interface to display a video camera health status, a video recorder health status, and a network health status.

Clause 17. The method in accordance with any preceding clauses, further configuring the display elements of the graphical user interface to display a confidence value for each of the video camera health status, the video recorder health status, and the network health status.

Clause 18. The method in accordance with any preceding clauses, wherein the verification test is repeated on a random basis.

Clause 19. The method in accordance with any preceding clauses, wherein the verification test is repeated on a scheduled basis.

Clause 20. The method in accordance with any preceding clauses, wherein the artificial intelligence comprises pattern-matching between input images and reference images.

Clause 21. A method of maintaining security devices, comprising instructions stored in non-transitory computer readable memory that, when executed by a processor, cause the processor to perform actions including: acquiring security data from one or more security devices; assessing security data quality by conducting one or more tests that compare the security data to one or more predetermined thresholds; and assigning one or more anomaly indicators to security devices if the security data quality fails to meet the one or more predetermined thresholds; and generating an automated maintenance report for the one or more security devices including the one or more anomaly indicators.

Clause 22. The method of clause 1, wherein acquiring security data from one or more security devices further comprises integrating a security maintenance system with one or more security systems comprising the one or more security devices.

Clause 23. The method in accordance with any preceding clauses, wherein the security devices comprise one or more video cameras and the security data comprises one or more video recordings captured by the one or more video cameras.

Clause 24. The method in accordance with any preceding clauses, wherein the one or more predetermined thresholds are predetermined based on video recordings stored in one or more databases.

Clause 25. The method in accordance with any preceding clauses, wherein conducting one or more tests comprises conducting one or more tests that detect one or more of tampering, lens obstruction, frame clarity, brightness levels, and blur levels.

Clause 26. The method in accordance with any preceding clauses, further comprising: periodically retrieving one or more security data sets from the one or more security devices; utilizing an artificial intelligence (AI) model to detect one or more anomalies; generating one or more predictive maintenance suggestions.

Clause 27. The method in accordance with any preceding clauses, wherein utilizing an AI model to detect anomalies further comprises: training the AI model based on the periodically retrieved security data; classifying the periodically retrieved data; and based on the classifying, detecting the one or more anomalies.

Clause 28. The method in accordance with any preceding clauses, further comprising: triggering one or more notifications if one or more anomalies are detected.

Clause 29. The method in accordance with any preceding clauses, wherein the one or more notifications comprise an alarm.

Clause 30. The method in accordance with any preceding clauses, further comprising one or more of: providing the one or more predictive maintenance suggestions to an authorized user; and performing one or more predictive maintenance actions automatically.

Clause 31. A security device maintenance system, comprising one or more computer readable memories; and one or more processors that are individually or in combination configured to: acquire security data from one or more security devices; assess security data quality by conducting one or more tests that compare the security data to one or more predetermined thresholds; and assign one or more anomaly indicators to security devices if the security data quality fails to meet the one or more predetermined thresholds; and generate an automated maintenance report for the one or more security devices including the one or more anomaly indicators.

Clause 32. The system in accordance with clause 31, wherein acquiring security data from one or more security devices further comprises integrating a security maintenance system with one or more security systems comprising the one or more security devices.

Clause 33. The system in accordance with any preceding clauses, wherein the security devices comprise one or more video cameras and the security data comprises one or more video recordings captured by the one or more video cameras.

Clause 34. The system in accordance with any preceding clauses, wherein the one or more predetermined thresholds are predetermined based on video recordings stored in one or more databases.

Clause 35. The system in accordance with any preceding clauses, wherein conducting one or more tests comprises conducting one or more tests that detect one or more of tampering, lens obstruction, frame clarity, brightness levels, and blur levels.

Clause 36. The system in accordance with any preceding clauses, wherein the one or more processors are further configured to: periodically retrieve one or more security data from the one or more security devices; utilize an artificial intelligence (AI) model to detect one or more anomalies; generating one or more predictive maintenance suggestions.

Clause 37. The system in accordance with any preceding clauses, wherein utilizing an AI model to detect anomalies further comprises: training the AI model based on the periodically retrieved security data; classifying the periodically retrieved data; and based on the classifying, detecting the one or more anomalies.

Clause 38. The system in accordance with any preceding clauses, wherein the one or more processors are further configured to: trigger one or more notifications if one or more anomalies are detected.

Clause 39. The system in accordance with any preceding clauses, wherein the one or more notifications comprise an alarm.

Clause 40. The system in accordance with any preceding clauses, wherein the one or more processors are further configured to perform: provide the one or more predictive maintenance suggestions to an authorized user; and initiate one or more predictive maintenance actions automatically.

Various aspects of the disclosure may take the form of an entirely or partially hardware aspect, an entirely or partially software aspect, or a combination of software and hardware. Furthermore, as described herein, various aspects of the disclosure (e.g., systems and methods) may take the form of a computer program product comprising a computer-readable non-transitory storage medium having computer-accessible instructions (e.g., computer-readable and/or computer-executable instructions) such as computer software, encoded or otherwise embodied in such storage medium. Those instructions can be read or otherwise accessed and executed by one or more processors to perform or permit the performance of the operations described herein. The instructions can be provided in any suitable form, such as source code, compiled code, interpreted code, executable code, static code, dynamic code, assembler code, combinations of the foregoing, and the like. Any suitable computer-readable non-transitory storage medium may be utilized to form the computer program product. For instance, the computer-readable medium may include any tangible non-transitory medium for storing information in a form readable or otherwise accessible by one or more computers or processor(s) functionally coupled thereto. Non-transitory storage media can include read-only memory (ROM); random access memory (RAM); magnetic disk storage media; optical storage media; flash memory, and so forth.

Aspects of this disclosure are described herein with reference to block diagrams and flowchart illustrations of methods, systems, apparatuses, and computer program products. It can be understood that each block of the block diagrams and flowchart illustrations, and combinations of blocks in the block diagrams and flowchart illustrations, respectively, can be implemented by computer-accessible instructions. In certain implementations, the computer-accessible instructions may be loaded or otherwise incorporated into a general-purpose computer, a special-purpose computer, or another programmable information processing apparatus to produce a particular machine, such that the operations or functions specified in the flowchart block or blocks can be implemented in response to execution at the computer or processing apparatus.

Unless otherwise expressly stated, it is in no way intended that any protocol, procedure, process, or method set forth herein be construed as requiring that its acts or steps be performed in a specific order. Accordingly, where a process or method claim does not actually recite an order to be followed by its acts or steps, or it is not otherwise specifically recited in the claims or descriptions of the subject disclosure that the steps are to be limited to a specific order, it is in no way intended that an order be inferred, in any respect. This holds for any possible non-express basis for interpretation, including: matters of logic with respect to the arrangement of steps or operational flow; plain meaning derived from grammatical organization or punctuation; the number or type of aspects described in the specification or annexed drawings; or the like.

As used in this disclosure, including the annexed drawings, the terms "component," "module," "system," and the like are intended to refer to a computer-related entity or an entity related to an apparatus with one or more specific functionalities. The entity can be either hardware, a combination of hardware and software, software, or software in execution. One or more of such entities are also referred to as "functional elements." As an example, a component can be a process running on a processor, a processor, an object, an executable, a thread of execution, a program, and/or a computer. For example, both an application running on a server or network controller, and the server or network controller can be a component. One or more components can reside within a process and/or thread of execution and a component can be localized on one computer and/or distributed between two or more computers. Also, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which parts can be controlled or otherwise operated by program code executed by a processor. As yet another example, a component can be an apparatus that provides specific functionality through electronic components without mechanical parts, the electronic components can include a processor to execute program code that provides, at least partially, the functionality of the electronic components. As still another example, interface(s) can include I/O components or Application Programming Interface (API) components. While the foregoing examples are directed to aspects of a component, the exemplified aspects or features also apply to a system, module, and similar.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in this specification and annexed drawings should be construed to mean "one or more" unless specified otherwise or clear from context to be directed to a singular form.

In addition, the terms "example" and "such as" and "e.g." are utilized herein to mean serving as an instance or illustration. Any aspect or design described herein as an "example" or referred to in connection with a "such as" clause or "e.g." is not necessarily to be construed as preferred or advantageous over other aspects or designs described herein. Rather, use of the terms "example" or "such as" or "e.g." is intended to present concepts in a concrete fashion. The terms "first," "second," "third," and so forth, as used in the claims and description, unless otherwise clear by context, is for clarity only and does not necessarily indicate or imply any order in time or space.

The term "processor," as utilized in this disclosure, can refer to any computing processing unit or device comprising processing circuitry that can operate on data and/or signaling. A computing processing unit or device can include, for example, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can include an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. In some cases, processors can exploit nano-scale architectures, such as molecular and quantum-dot based transistors, switches and gates, in order to optimize space usage or enhance performance of user equipment. A processor may also be implemented as a combination of computing processing units.

In addition, terms such as "store," "data store," data storage," "database," and substantially any other information storage component relevant to operation and functionality of a component, refer to "memory components," or entities embodied in a "memory" or components comprising the memory. It will be appreciated that the memory components described herein can be either volatile memory or nonvolatile memory, or can include both volatile and nonvolatile memory. Moreover, a memory component can be removable or affixed to a functional element (e.g., device, server).

Simply as an illustration, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

Various aspects described herein can be implemented as a method, apparatus, or article of manufacture using special programming as described herein. In addition, various of the aspects disclosed herein also can be implemented by means of program modules or other types of computer program instructions specially configured as described herein and stored in a memory device and executed individually or in combination by one or more processors, or other combination of hardware and software, or hardware and firmware. Such specially configured program modules or computer program instructions, as described herein, can be loaded onto a general-purpose computer, a special-purpose computer, or another type of programmable data processing apparatus to produce a machine, such that the instructions which execute on the computer or other programmable data processing apparatus create a means for implementing the functionality of disclosed herein.

The term "article of manufacture" as used herein is intended to encompass a computer program accessible from any non-transitory computer-readable device, carrier, or media. For example, computer readable media can include but are not limited to magnetic storage devices (e.g., hard drive disk, floppy disk, magnetic strips, or similar), optical discs (e.g., compact disc (CD), digital versatile disc (DVD), blu-ray disc (BD), or similar), smart cards, and flash memory devices (e.g., card, stick, key drive, or similar).

The detailed description set forth herein in connection with the annexed figures is intended as a description of various configurations or implementations and is not intended to represent the only configurations or implementations in which the concepts described herein may be practiced. The detailed description includes specific details for the purpose of providing a thorough understanding of various concepts. However, it will be apparent to those skilled in the art that these concepts may be practiced without these specific details or with variations of these specific details. In some instances, well-known components are shown in block diagram form, while some blocks may be representative of one or more well-known components.

The previous description of the disclosure is provided to enable a person skilled in the art to make or use the disclosure. Various modifications to the disclosure will be readily apparent to those skilled in the art, and the common principles defined herein may be applied to other variations without departing from the scope of the disclosure. Furthermore, although elements of the described aspects may be described or claimed in the singular, the plural is contemplated unless limitation to the singular is explicitly stated. Additionally, all or a portion of any aspect may be utilized with all or a portion of any other aspect, unless stated otherwise. Thus, the disclosure is not to be limited to the examples and designs described herein but is to be accorded the widest scope consistent with the principles and novel features disclosed herein.

## Claims

1. A method of maintaining security devices, comprising instructions stored in non-transitory computer readable memory that, when executed by a processor, cause the processor to perform actions including:
acquiring security data from one or more security devices;
assessing security data quality by conducting one or more tests that compare the security data to one or more predetermined thresholds; and
assigning one or more anomaly indicators to security devices if the security data quality fails to meet the one or more predetermined thresholds; and
generating an automated maintenance report for the one or more security devices including the one or more anomaly indicators.

2. The method of claim 1, wherein acquiring security data from one or more security devices further comprises integrating a security maintenance system with one or more security systems comprising the one or more security devices.

3. The method of claim 1 or 2, wherein the security devices comprise one or more video cameras and the security data comprises one or more video recordings captured by the one or more video cameras.

4. The method of claim 3, wherein the one or more predetermined thresholds are predetermined based on video recordings stored in one or more databases; and/or
wherein conducting one or more tests comprises conducting one or more tests that detect one or more of tampering, lens obstruction, frame clarity, brightness levels, and blur levels.

5. The method of claim 3 or 4, further comprising:
periodically retrieving one or more security data sets from the one or more security devices;
utilizing an artificial intelligence (AI) model to detect one or more anomalies; generating one or more predictive maintenance suggestions.

6. The method of claim 5, wherein utilizing an AI model to detect anomalies further comprises:
training the AI model based on the periodically retrieved security data;
classifying the periodically retrieved data; and
based on the classifying, detecting the one or more anomalies.

7. The method of claim 5 or 6, further comprising:
triggering one or more notifications if one or more anomalies are detected;
optionally, wherein the one or more notifications comprise an alarm.

8. The method of any of claims 5 to 7, further comprising one or more of:
providing the one or more predictive maintenance suggestions to an authorized user; and
performing one or more predictive maintenance actions automatically.

9. A security device maintenance system, comprising
one or more computer readable memories; and
one or more processors that are individually or in combination configured to:
acquire security data from one or more security devices;
assess security data quality by conducting one or more tests that compare the security data to one or more predetermined thresholds; and
assign one or more anomaly indicators to security devices if the security data quality fails to meet the one or more predetermined thresholds; and
generate an automated maintenance report for the one or more security devices including the one or more anomaly indicators.

10. The system of claim 9, wherein acquiring security data from one or more security devices further comprises integrating a security maintenance system with one or more security systems comprising the one or more security devices.

11. The system of claim 9 or 10, wherein the security devices comprise one or more video cameras and the security data comprises one or more video recordings captured by the one or more video cameras.

12. The system of claim 11, wherein the one or more predetermined thresholds are predetermined based on video recordings stored in one or more databases; and/or
wherein conducting one or more tests comprises conducting one or more tests that detect one or more of tampering, lens obstruction, frame clarity, brightness levels, and blur levels.

13. The system of claim 11 or 12, wherein the one or more processors are further configured to:
periodically retrieve one or more security data from the one or more security devices;
utilize an artificial intelligence (AI) model to detect one or more anomalies; generating one or more predictive maintenance suggestions.

14. The system of claim 13, wherein utilizing an AI model to detect anomalies further comprises:
training the AI model based on the periodically retrieved security data;
classifying the periodically retrieved data; and
based on the classifying, detecting the one or more anomalies.

15. The system of claim 13 or 14, wherein the one or more processors are further configured to:
trigger one or more notifications if one or more anomalies are detected;
optionally, wherein the one or more notifications comprise an alarm; and/or
wherein the one or more processors are further configured to perform:
provide the one or more predictive maintenance suggestions to an authorized user; and
initiate one or more predictive maintenance actions automatically.
